# EUROPÄISCHE PATENTSCHRIFT

(11) **EP 2 176 721 B1**
(45) Veröffentlichungstag und Bekanntmachung des Hinweises auf die Patenterteilung: **21.09.2011**
(21) Anmeldenummer: 08774764.8
(22) Anmeldetag: 04.07.2008
(51) Int. Cl.: G05D 7/01, B67C 3/28

(54) **FÜLLVORRICHTUNG ZUM ABFÜLLEN EINES FLIEßFÄHIGEN MEDIUMS**
FILLING DEVICE FOR FILLING A FREE-FLOWING MEDIUM
DISPOSITIF DE REMPLISSAGE POUR LE CONDITIONNEMENT D'UNE SUBSTANCE FLUIDE

(30) Priorität: 02.08.2007 DE 102007036265
(43) Veröffentlichungstag der Anmeldung: 21.04.2010
(73) Patentinhaber: Robert Bosch GmbH, 70442 Stuttgart (DE)
(72) Erfinder: DAEUBER, Rolf, 74542 Braunsbach (DE)
(86) Internationale Anmeldenummer: PCT/EP2008/058656
(87) Internationale Veröffentlichungsnummer: WO 2009/015986

(56) Entgegenhaltungen:
- WO-A1-99/41149
- GB-A- 1 237 678
- US-A- 2 590 215
- US-A- 2 904 063
- US-A- 3 788 370
- US-A- 4 570 822

## Beschreibung

Die vorliegende Anmeldung betrifft eine Füllvorrichtung zum Abfüllen eines fließfähigen Mediums, insbesondere einer Flüssigkeit für eine pharmazeutische Anwendung.

Füllvorrichtungen sind aus dem Stand der Technik in unterschiedlichen Ausgestaltungen bekannt. Beispielsweise für pharmazeutische Anwendungen ist es notwendig, dass eine genaue Dosierung eines flüssigen Medikaments in eine Spritze oder eine Ampulle o. Ä. erfolgt. Hierzu wird das einzufüllende Medikament in einem unter Druck stehenden Behälter gespeichert und über eine Leitung und eine Einfüllnadel in das Behältnis abgefüllt. Hierbei ist eine Drossel in der Leitung vorgesehen, an welcher ein Druckabfall auftritt, um eine möglichst genaue Dosierung des flüssigen Medikaments in das Behältnis zu erreichen. Die Drossel wird hierbei vorzugsweise aus Metall oder auch aus Kunststoff hergestellt und muss, um einen gewünschten Druckabfall zu erzeugen, einen vorbestimmten Durchmesser aufweisen. Da die Füllvorrichtung jedoch für unterschiedliche Medikamente verwendet wird, welche auch in unterschiedliche Behältnisse eingefüllt werden müssen, muss so eine große Anzahl unterschiedlicher Drosseln mit verschiedenen Durchmessern vorgehalten werden, um unterschiedliche Medien abfüllen zu können. Ferner tritt im pharmazeutischen Bereich weiter das Problem auf, dass derartige Drosseln und Leitungen häufig nur für eine Medikamentencharge benutzbar sind und dann entsorgt werden müssen, um Verunreinigungen bei einer nachfolgenden Abfüllung zu vermeiden. Von daher ist die bekannte Füllvorrichtung sehr kostenintensiv, wenn unterschiedliche Medien mit der gleichen Füllvorrichtung abgefüllt werden sollen.

Aus der US 4,570,822 A ist bereits eine Füllvorrichtung zum Abfüllen eines fließfähigen Mediums in einem Behältnis bekannt, welches einen Speicher zur Speicherung des Mediums, einen Füllpfad mit einem Schlauchelement umfasst, über welches das Medium vom Speicher zum Behältnis geführt wird. Ein Ventil ist im Füllpfad zwischen dem Speicher und dem Behältnis angeordnet. Dieses Ventil kontrolliert den Fluss, ohne dass bewegliche Teile in Kontakt mit der Flüssigkeit kommen.

Aus der US 2,590,215 A ist ein variables Drosselventil bekannt. Das Ventil besteht aus einem zylindrischen Gehäuse. Innerhalb des Gehäuses befindet sich ein Ventilteil aus flexiblem Material. Dieses Teil umfasst ein inneres Rohr, welches einen auswärts gerichteten Flansch aufweist.

Aus der US 2,904,063 A ist eine Steuervorrichtung bekannt, um den Durchfluss zu steuern. Hierbei ist ein entsprechender Behälter vorgesehen sowie eine Fluidquelle, um Fluid unter Druck dem Behältnis zuzuführen. Eine entsprechende Einrichtung steuert kontinuierlich den Fluidfluss durch Quetschen eines flexiblen Schlauchs.

Aus der WO 99/41149 ist eine Füllvorrichtung für ein Behältnis bekannt, bei der eine Zuführung mit einem Speichertank verbunden ist. Weiterhin sind Quetschmittel vorgesehen, welche mit einem verformbaren Schlauch in der Zuführung zusammenwirken.

### Vorteile der Erfindung

Die erfindungsgemäße Füllvorrichtung zum Abfüllen eines fließfähigen Mediums mit den Merkmalen des Patentanspruchs 1 weist demgegenüber den Vorteil auf, dass sie auch bei Abfüllung unterschiedlicher Medien sehr kostengünstig und einfach bereitgestellt werden kann. Auch für den Fall, dass das abfüllende Medium es bedingt, dass Teile des Füllpfades entsorgt werden müssen, kann die erfindungsgemäße Füllvorrichtung sehr kostengünstig arbeiten. Dies wird erfindungsgemäß dadurch erreicht, dass die Füllvorrichtung ein Schlauchelement umfasst, welches Teil des Füllpfades ist und das Medium von einem Speicher zum Behältnis führt, und eine Drosseleinrichtung umfasst, welche am Schlauchelement angeordnet ist. Die Drosseleinrichtung ist dabei am Schlauchelement angeordnet und reduziert den Innendurchmesser des Schlauches für eine Drosselwirkung, wobei die Reduzierung des Innendurchmessers des Schlauches derart erfolgt, dass der reduzierte Innendurchmesser kreisförmig ist. Hierdurch kann eine sehr genaue Einstellung des Innendurchmessers und somit der Drosselwirkung in diesem Bereich erreicht werden.

Die Unteransprüche zeigen bevorzugte Weiterbildungen der Erfindung.

Vorzugsweise ist die Drosseleinrichtung an der Außenseite des Schlauchelements angeordnet. Dadurch kann die Drosseleinrichtung wieder verwendet werden, auch wenn beispielsweise der Schlauch oder andere Teile des Füllpfades entsorgt werden müssen. Die Drosseleinrichtung kann dabei an einer beliebigen Stelle an der Außenseite des Schlauchelements positioniert werden.

Besonders bevorzugt ist die Drosseleinrichtung dabei lösbar an der Außenseite des Schlauchs befestigt. Hierzu kann die Drosseleinrichtung beispielsweise kleine vorstehende Halteelemente aufweisen, welche eine Fixierung am Schlauch ermöglichen, ohne dass der Schlauch beschädigt wird.

Besonders bevorzugt umfasst die Drosseleinrichtung ein Grundteil und ein bewegliches Spannteil, welches sich in Wirkverbindung mit dem Grundteil befindet. Das Grundteil umfasst dabei einen ortsfesten Haltebereich und einen flexiblen Bereich, wobei der flexible Bereich mit dem beweglichen Spannteil in Kontakt bringbar ist, um den Innendurchmesser des Schlauches zu verändern. Der flexible Bereich des Grundteils ermöglicht es dabei, dass eine Veränderung des Innendurchmessers des Schlauches kontinuierlich erfolgen kann. Dadurch kann die Drosseleinrichtung auf alle möglichen Innendurchmesser eingestellt werden.

Vorzugsweise umfasst der flexible Bereich des Grundteils eine Vielzahl von Fingern, welche gleichmäßig entlang eines Umfangs des Grundteils angeordnet sind. Die Vielzahl von Fingern können dabei ihre Position in Radialrichtung ändern, um eine stufenlose Durchmesseränderung des Schlauches zu ermöglichen. Um eine möglichst genaue Durchmesseränderung des Innendurchmessers des Schlauches zu erreichen, sind möglichst viele flexible Finger vorgesehen.

Weiter bevorzugt umfasst das Spannteil einen sich verjüngenden Bereich, insbesondere einen konischen Bereich, welcher mit dem flexiblen Bereich in Kontakt bringbar ist. Dadurch wird auf einfache Weise die Positionsänderung des flexiblen Bereichs erreicht, wodurch die Durchmesseränderung des Schlauches resultiert.

Um eine möglichst genaue und stufenlose Verstellung des Innendurchmessers des Schlauches zu ermöglichen, ist das Grundteil mit dem beweglichen Teil mittels einer Gewindeverbindung verbunden. Die Gewindeverbindung ist vorzugsweise als Feingewinde ausgebildet Somit kann durch Verdrehen des beweglichen Teils relativ zum Grundteil eine Veränderung der Position des flexiblen Bereichs des Grundteils erreicht werden, um eine Änderung des Innendurchmessers des Schlauches zu ermöglichen.

Gemäß einer alternativen Ausgestaltung der vorliegenden Erfindung ist das Grundteil mit dem beweglichen Teil mittels einer Rastverbindung verbunden. Dadurch kann eine Änderung des Innendurchmessers des Schlauchelements in Schritten entsprechend den Rastschritten erfolgen. Diese Ausgestaltung hat den Vorteil, dass auf einfache Weise exakte, vorbestimmte Innendurchmesser des Schlauchelements eingestellt werden können.

Weiter bevorzugt ist das bewegliche Teil zweiteilig aus einem zylindrischen ersten Teil und einem zweiten Teil mit sich verjüngendem Bereich gebildet, wobei der erste Teil formschlüssig mit dem zweiten Teil verbunden ist. Hierdurch kann das bewegliche Teil besonders kostengünstig bereitgestellt werden. Die Antriebseinrichtung ist vorzugsweise ein Elektromotor.

Weiter bevorzugt umfasst die Füllvorrichtung ferner eine Antriebseinrichtung, um eine Relativverstellung zwischen dem Grundteil und dem beweglichen Spannteil vorzunehmen. Hierdurch kann eine automatisierte Einstellung der benötigten Drosselwirkung an der Drosseleinrichtung erhalten werden.

Gemäß einer weiteren bevorzugten Ausgestaltung der vorliegenden Erfindung umfasst die Füllvorrichtung eine Drosseleinrichtung, einen Zylinder, einen mit dem Zylinder verbundenen ersten Endteil, einen mit dem Zylinder verbundenen zweiten Endteil und ein zwischen dem ersten Endteil und dem zweiten Endteil angeordnetes verformbares zweites Schlauchstück, welche an der Außenseite des Schlauchelements einen Druckraum bilden, um mittels eines in den Druckraum zugeführten, unter Druck stehenden Mediums eine kreisförmige Änderung des Innendurchmessers des Schlauchelements zu ermöglichen. Dadurch kann eine Drosselung durch ein außen am Schlauchelement wirkendes, unter Druck stehendes Medium, insbesondere eine Flüssigkeit wie Wasser, erreicht werden.

Die erfindungsgemäße Füllvorrichtung wird vorzugsweise zur Abfüllung von pharmazeutischen Produkten, insbesondere von flüssigen Medikamenten oder Lösungen verwendet. Sollte nach einer Abfüllung ein Austausch des Füllpfades notwendig sein, muss erfindungsgemäß nur das Schlauchelement ersetzt werden. Die Drosseleinrichtung kann dabei wiederverwendet werden.

### Zeichnung

Nachfolgend wird ein bevorzugtes Ausführungsbeispiel einer Füllvorrichtung gemäß einem Ausführungsbeispiel der vorliegenden Erfindung im Detail beschrieben. In der Zeichnung ist:
- Figur 1: eine schematische Ansicht einer Füllvorrichtung gemäß einem ersten Ausführungsbeispiel der Erfindung,
- Figur 2: eine schematische Ansicht einer Drosseleinrichtung der Füllvor- richtung gemäß dem ersten Ausführungsbeispiel der Erfindung in einem Zustand ohne Drosselwirkung,
- Figur 3: eine schematische Ansicht der in Figur 2 gezeigten Drosselein- richtung in einem Zustand mit Drosselwirkung, und
- Figur 4: eine schematische Ansicht einer Drosseleinrichtung gemäß ei- nem zweiten Ausführungsbeispiel der Erfindung in einem Zu- stand mit Drosselwirkung.

### Bevorzugte Ausführungsformen der Erfindung

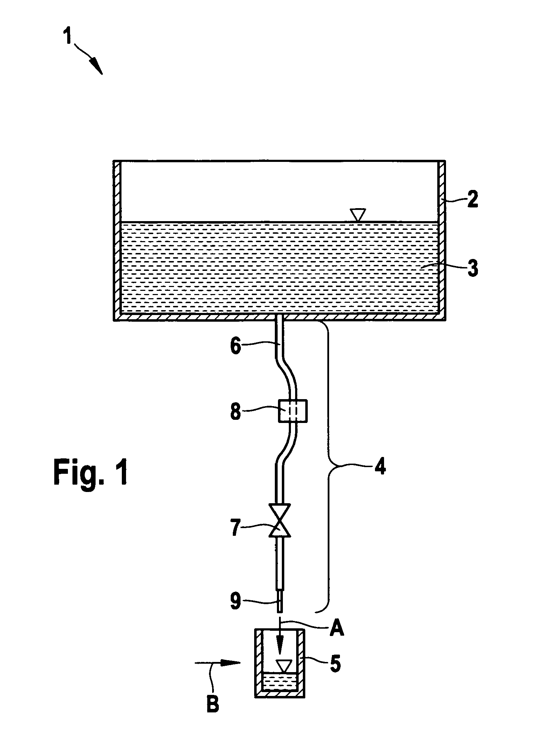

Nachfolgend wird unter Bezugnahme auf die Figuren 1 bis 3 eine Füllvorrichtung 1 gemäß einem ersten Ausführungsbeispiel der Erfindung im Detail beschrieben.

Wie in Figur 1 schematisch dargestellt, umfasst die Füllvorrichtung 1 einen Speicher 2 zur Speicherung eines fließfähigen Mediums 3 und einen Füllpfad 4, um das fließfähige Medium 3 zu einem Behältnis 5 zuzuführen. Das fließfähige Medium 3 ist dabei in diesem Ausführungsbeispiel ein flüssiges Medikament. Der Füllpfad 4 umfasst ein Schlauchelement 6, in welchem ein Ventil 7 angeordnet ist. Ferner ist am Schlauchelement 6 eine Drosseleinrichtung 8 angeordnet. Das Bezugszeichen 9 bezeichnet eine Füllnadel, durch welche ein Abfüllen des fließfähigen Mediums 3 in das Behältnis 5 erfolgt. Dies ist in Figur 1 durch den Pfeil A angedeutet. In Figur 1 ist ein Behältnis 5 gerade mit einem fließfähigen Medium 3 befüllt worden. Der Pfeil B in Figur 1 deutet an, dass leere Behältnisse mit einer nicht gezeigten Transporteinrichtung zugeführt werden und nach dem Befüllen zu einer nachfolgenden Schließstation transportiert werden, um verschlossen zu werden. Anschließend kann noch eine Packstation zur Verpackung der befüllten Behältnisse folgen.

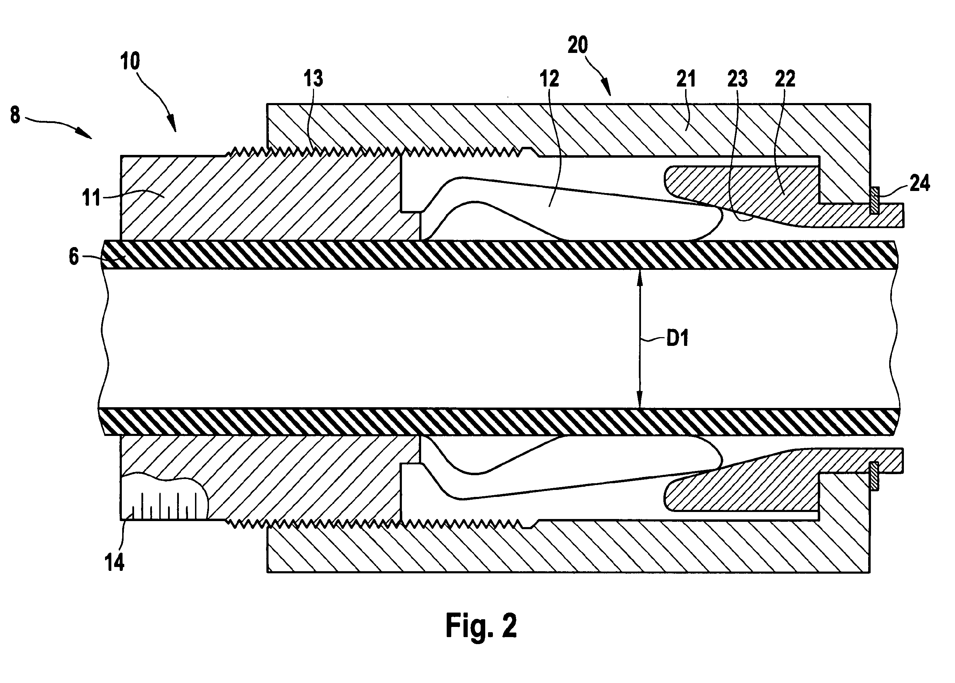

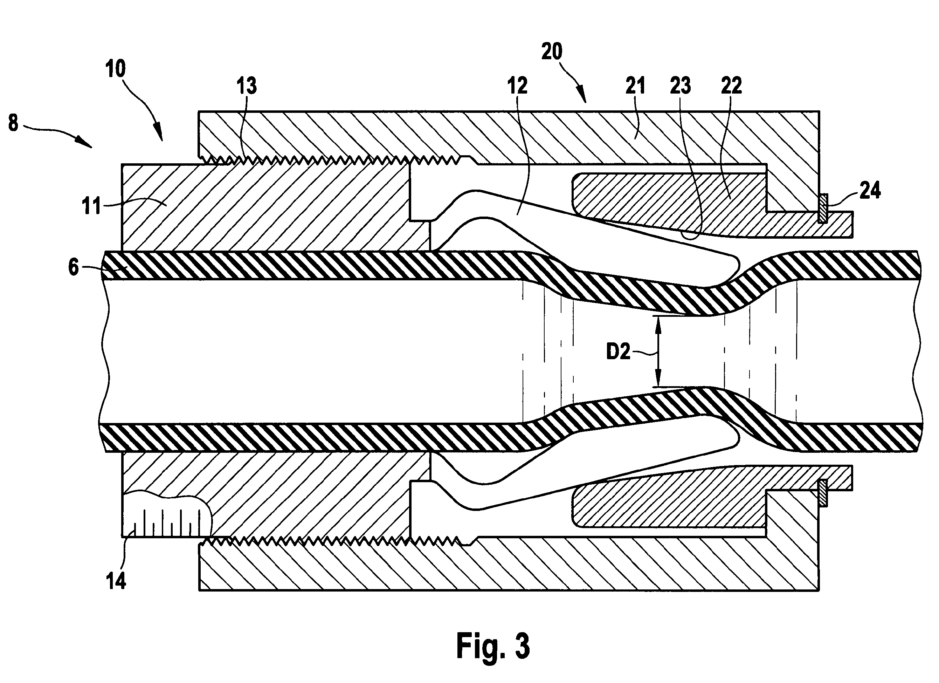

Die Figuren 2 und 3 zeigen im Detail die Drosseleinheit 8. Wie aus den Figuren 2 und 3 ersichtlich ist, ist die Drosseleinheit 8 an einer Außenseite des Schlauchelements 6 angeordnet. Die Drosseleinheit 8 umfasst ein feststehendes Grundteil 10 und ein bewegliches Spannteil 20. Das Grundteil 10 umfasst dabei einen ortsfesten Haltebereich 11 und einen flexiblen Bereich 12. Der flexible Bereich 12 umfasst dabei eine Vielzahl von am Haltebereich 11 flexiblen angeordneten Fingern, welche entlang eines Umfangs des Grundteils in jeweils gleichem Abstand angeordnet sind. Der ortsfeste Haltebereich 11 ist dabei vorzugsweise mittels einer Presspassung mit dem Schlauchelement 6 verbunden. Das Spannteil 20 umfasst einen zylindrischen ersten Teil 21 und einen zweiten Teil 22 mit einem sich verjüngenden Bereich 23. Der zylindrische erste Teil 21 ist dabei formschlüssig mit dem zweiten Teil 22 verbunden und mittels eines Sicherungsrings 24 an diesem gesichert. Der sich verjüngende Bereich 23 ist in diesem Ausführungsbeispiel konisch und befindet sich mit dem flexiblen Bereich 12 des Grundteils 10 in Kontakt. Es sei angemerkt, dass das erste Teil 21 und das zweite Teil 22 auch als ein einstückiges Teil ausgebildet sein können. Figur 2 zeigt dabei einen Zustand der Drosseleinrichtung 8, bei welchem keine Drosselung des fließfähigen Mediums vorgenommen wird, und Figur 3 zeigt einen Zustand der Drosseleinrichtung 8, bei welchem eine Drosselung des fließfähigen Mediums vorgenommen wird.

Das Grundteil 10 und das Spannteil 20 sind über eine Gewindeverbindung 13 miteinander verbunden. Über die Gewindeverbindung 13 kann dabei eine Relativbewegung zwischen dem Grundteil 10 und dem Spannteil 20 ausgeführt werden, wobei das Grundteil 10 ortsfest verbleibt. Die Gewindeverbindung 13 ist ein Feingewinde, so dass durch Drehen des Spannteils 20 gegenüber dem Grundteil 10 der sich verjüngende Bereich 23 sich langsam auf den flexiblen Bereich 12 schiebt. Dadurch werden die Finger des flexiblen Bereichs 12 nach innen gedrückt, wodurch eine Reduzierung des Innendurchmessers des Schlauchelements 6 erfolgt. Wie ein Vergleich zwischen den Figuren 2 und 3 zeigt, wird dabei der Innendurchmesser des Schlauchs 6 von einem Ausgangszustand mit einem Innendurchmesser D1 auf einen Zustand mit einem Innendurchmesser D2 reduziert. Durch die Vielzahl der am Außenumfang des Schlauchelements 6 angeordneten Finger wird dabei eine Durchmesserreduzierung derart erreicht, dass der verengte Durchfluss am Schlauchelement 6 kreisförmig verbleibt. Dadurch kann ein exakter Druckabfall an dem reduzierten Innendurchmesser erreicht werden, so dass eine genaue Dosierung des fließfähigen Mediums 3 möglich ist Da es sich bei dem abzufüllenden fließfähigen Medium in diesem Ausführungsbeispiel um ein flüssiges Medikament handelt, muss eine höchst genaue Dosierung erreicht werden. Um hierbei eine exakte Einstellung des Innendurchmessers und damit des Druckabfalls an der Drosseleinrichtung zu ermöglichen, ist an einer Außenseite des Grundteils 10 eine Markierung 14 vorgesehen. Somit kann durch Verdrehen des Spannteils 20 relativ zum Grundteil 10 eine vorbestimmte Drosselwirkung an der Drosseleinrichtung 8 erreicht werden, so dass eine nicht gezeigte Steuereinrichtung in Abhängigkeit von einer Öffnungszeit des Ventils 7 eine exakte Zumessung von fließfähigem Medium 3 in das Behältnis 5 ermöglicht wird.

Wenn der Füllvorgang beendet ist, kann durch einfaches Zurückdrehen des Spindelteils 20 auf dem Grundteil 10 der Innendurchmesser des Schlauchelements 6 im Bereich der Drosseleinrichtung 8 wieder in den Ausgangszustand zurückgestellt werden. Die Finger des flexiblen Bereichs 12 stellen sich dabei aufgrund ihrer Eigenelastizität wieder in den in Figur 2 gezeigten Ausgangszustand zurück. Gleiches gilt für das aus einem Elastomermaterial hergestellte Schlauchelement 6. Sollte insbesondere aufgrund einer Aggressivität des fließfähigen Mediums 3 ein Austausch des Füllpfades 4 notwendig sein, muss erfindungsgemäß lediglich der Schlauch 6 und gegebenenfalls das Ventil 7 und die Füllnadel 9 ausgetauscht werden. Die Drosseleinrichtung 8 kann einfach vom Schlauchelement 6 abgezogen werden und für einen nächsten Füllvorgang auf ein neues Schlauchelement 6 aufgezogen werden und wieder verwendet werden. Im Vergleich mit dem Stand der Technik muss somit einerseits nicht der komplette Füllpfad 4 der Füllvorrichtung 1 entsorgt werden, sondern die Drosseleinrichtung 8 kann wieder verwendet werden. Auch in dem Fall, in dem der Füllpfad 4 nicht entsorgt werden muss, sondern für einen erneuten Füllvorgang verwendet werden kann, kann die Drosseleinrichtung 8 problemlos auf einen neuen Innendurchmesser D2 im Schlauchelement 6 eingestellt werden. Somit ist es nicht notwendig, dass wie im Stand der Technik eine Vielzahl von unterschiedlichen Drosseleinrichtungen 8 vorgehalten werden muss, welche dann bei einer Abfüllung eines anderen Mediums gegebenenfalls aufwendig ausgetauscht werden müssen. Die erfindungsgemäße Füllvorrichtung weist in diesem Fall eine reduzierte Teilezahl zur Verstellung der Drosseleinrichtung 8 auf.

Um eine weitere Verbesserung der Genauigkeit des Abfüllvorgangs zu erreichen, sei ferner angemerkt, dass insbesondere die Innendurchmesser des Schlauchelements 6 aufgrund von herstellungsbedingten Toleranzen unterschiedlich sein können. Daher wird vorzugsweise vor einer Verwendung eines neuen Schlauchelements ein Innendurchmesser mittels eines optischen Messsystems gemessen und einer Steuervorrichtung der Füllvorrichtung 1 übermittelt. Anhand des gemessenen Innendurchmessers kann somit eine exakte Einstellung der Drosseleinrichtung 8 mit dem für den Füllvorgang notwendigen Druckabfall an der Drosseleinrichtung ermöglicht werden.

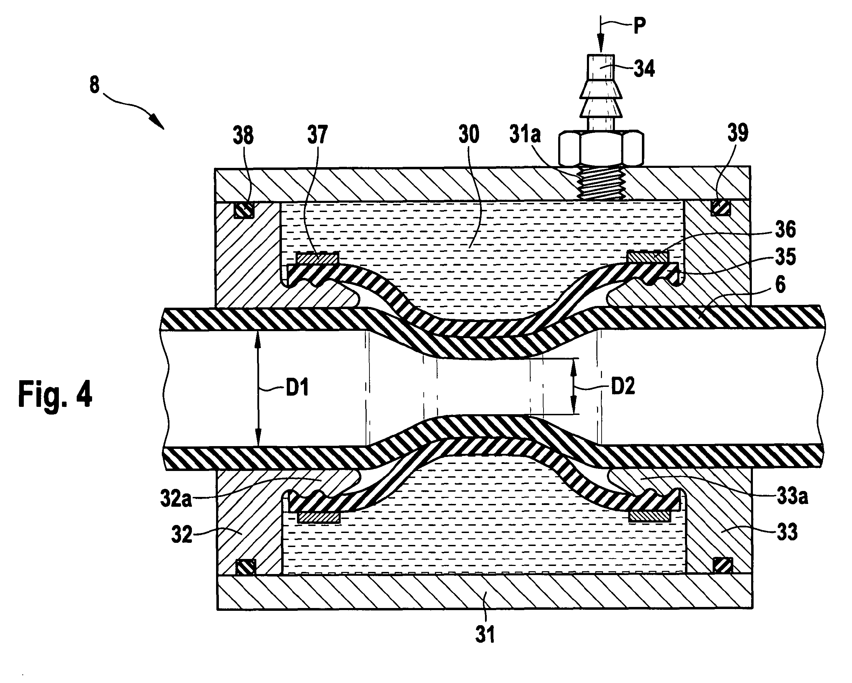

Nachfolgend wird unter Bezugnahme auf Figur 4 eine Füllvorrichtung mit einer Drosseleinrichtung gemäß einem zweiten Ausführungsbeispiel der vorliegenden Erfindung im Detail beschrieben. Gleiche bzw. funktional gleiche Teile sind dabei mit den gleichen Bezugszeichen wie im ersten Ausführungsbeispiel bezeichnet.

Wie aus Figur 4 ersichtlich ist, ist die Drosseleinrichtung 8 des zweiten Ausführungsbeispiels ebenfalls außen am Schlauchelement 6 angeordnet. Die Drosseleinrichtung 8 des zweiten Ausführungsbeispiels umfasst dabei einen Druckraum 30, welcher an einem Außenbereich des Schlauchelements 6 durch einen Zylinder 31, ein erstes Endteil 32, ein zweites Endteil 33 und ein verformbares, zweites Schlauchstück 35 definiert wird. Das verformbare, zweite Schlauchstück 35 ist dabei an einem vorstehenden Bereich 32a des ersten Endteils 32 und an einem vorstehenden Bereich 33a des zweiten Endteils 33 mittels jeweils einer Schlauchschelle 36, 37 fixiert. Das verformbare zweite Schlauchstück 35 bildet dabei eine Trennwand zwischen dem Druckraum 30 und dem Schlauchelement 6. Die Drosseleinrichtung 8 ist auf dem Schlauchelement 6 dabei mittels einer Presspassung zwischen dem ersten und zweiten Endteil 32, 33 und dem Schlauchelement 6 fixiert. Im Zylinder 31 ist ferner eine Öffnung 31a vorgesehen, an welcher ein Druckanschluss 34 angeordnet ist. Der Zylinder 31, das erste Endteil 32 und das zweite Endteil 33 sind vorzugsweise aus einem Metallmaterial hergestellt. Zwischen dem ersten Endteil 32 und dem Zylinder 31 ist eine erste Dichtung 38 vorgesehen und zwischen dem zweiten Endteil 33 und dem Zylinder 31 ist eine zweite Dichtung 39 vorgesehen. Somit ist der Druckraum 30 gegen die äußere Umgebung abgedichtet. Der Druckraum 30 legt sich somit ringförmig um einen äußeren Umfang des Schlauchelements 6. Wenn, wie in Figur 4 durch den Pfeil P angedeutet, ein unter Druck stehendes Fluid, insbesondere Wasser, in den Druckraum 30 zugeführt wird, beginnt sich das zweite Schlauchstück 35, wie in Figur 4 dargestellt, zu verformen. Hierdurch erfolgt eine ringförmige Einschnürung des Schlauchelements 6 von einem ursprünglichen Durchmesser D1 auf einen Drosseldurchmesser D2. Der Durchmesser D2 hängt dabei insbesondere vom Druck im Druckraum 30 ab. Durch die Fixierung des verformbaren zweiten Schlauchstücks 34 jeweils an seinen beiden Enden mittels der Schlauchschellen 36, 37 erfolgt eine Verformung des zweiten Schlauchstücks 35 in einem Mittelbereich, wie in Figur 4 dargestellt. Somit erfolgt ebenfalls eine konzentrische Einschnürung des Schlauchelements 6, so dass eine Drosselwirkung am Schlauchelement 6 erreicht wird, ohne dass die Drosseleinheit dabei mit dem zu drosselnden Medium in Kontakt kommt. Ansonsten entspricht dieses Ausführungsbeispiel dem vorhergehenden Ausführungsbeispiel, so dass auf die dort gegebene Beschreibung verwiesen werden kann.

## Patentansprüche

1. Füllvorrichtung zum Abfüllen eines fließfähigen Mediums (3) in ein Behältnis (5), umfassend
- einen Speicher (2) zur Speicherung des Mediums (3),
- einen Füllpfad (4) mit einem Schlauchelement (6), über welches das Medium (3) vom Speicher (2) zum Behältnis (5) geführt wird,
- ein Ventil (7), welches im Füllpfad zwischen dem Speicher (2) und dem Behältnis (5) angeordnet ist, um den Füllpfad (4) freizugeben und zu verschließen, und
- eine Drosseleinrichtung (8), welche am Schlauchelement (6) angeordnet ist, und an einem Abschnitt des Schlauchelements (6) einen Innendurchmesser des Schlauchelements für eine Drosselwirkung ändert, **dadurch gekennzeichnet, dass** der durch die Drosseleinrichtung (8) veränderte Innendurchmesser kreisförmig ist.

2. Füllvorrichtung nach Anspruch 1, **dadurch gekennzeichnet, dass** die Drosseleinrichtung (8) an der Außenseite des Schlauchelements (6) angeordnet ist

3. Füllvorrichtung nach Anspruch 2, **dadurch gekennzeichnet, dass** die Drosseleinrichtung (8) lösbar an der Außenseite des Schlauchelements (6) befestigt ist.

4. Füllvorrichtung nach einem der vorhergehenden Ansprüche, **dadurch gekennzeichnet, dass** die Drosseleinrichtung (8) einen Grundteil (10) und ein bewegliches Spannteil (20) umfasst, welches sich in Wirkverbindung mit dem Grundteil (10) befindet, wobei das Grundteil (10) einen ortsfesten Haltebereich (11) und einen flexiblen Bereich (12) umfasst, und wobei der flexible Bereich (12) mit dem beweglichen Spannteil (20) in Kontakt bringbar ist, um den Innendurchmesser des Schlauchelements (6) zu verändern.

5. Füllvorrichtung nach Anspruch 4, **dadurch gekennzeichnet, dass** der flexible Bereich (12) eine Vielzahl von Fingerelementen aufweist, welche gleichmäßig entlang eines Umfangs des Grundteils (10) angeordnet sind.

6. Füllvorrichtung nach Anspruch 4 oder 5, **dadurch gekennzeichnet, dass** das Spannteil (20) einen sich verjüngenden Bereich (23) aufweist, welcher sich mit dem flexiblen Bereich (12) in Kontakt bringbar ist.

7. Füllvorrichtung nach einem der Ansprüche 4 bis 6, **dadurch gekennzeichnet, dass** das Grundteil (10) mit dem beweglichen Spannteil (20) mittels einer Gewindeverbindung (13) verbunden ist.

8. Füllvorrichtung nach einem der Ansprüche 4 bis 6, **dadurch gekennzeichnet, dass** das Grundteil (10) mit dem beweglichen Spannteil (20) mittels einer Rastverbindung verbunden ist.

9. Füllvorrichtung nach einem der Ansprüche 3 bis 7, **dadurch gekennzeichnet, dass** das bewegliche Spannteil (20) zweiteilig aus einem zylindrischen ersten Teil (21) und einem zweiten Teil (22) mit sich verjüngendem Bereich (23) gebildet ist, wobei der erste Teil (21) formschlüssig mit dem zweiten Teil (22) verbunden ist.

10. Füllvorrichtung nach einem der vorhergehenden Ansprüche, ferner umfassend eine Antriebseinrichtung, insbesondere einen Elektromotor, um eine Relativverstellung zwischen dem Grundteil (10) und dem beweglichen Spannteil (20) vorzunehmen.

11. Füllvorrichtung nach einem der Ansprüche 1 bis 3, **dadurch gekennzeichnet, dass** die Drosseleinrichtung (8) einen Zylinder (31), einen mit dem Zylinder (31) verbundenen ersten Endteil (32), einen mit dem Zylinder (31) verbundenen zweiten Endteil (33) und ein zwischen dem ersten Endteil (32) und dem zweiten Endteil (33) angeordnetes verformbares zweites Schlauchstück (35) umfasst, welche an der Außenseite des Schlauchelements (6) einen Druckraum (30) bilden, um mittels eines in den Druckraum (30) zugeführten, unter Druck stehenden Mediums eine konzentrische Änderung des Innendurchmessers des Schlauchelements (6) zu ermöglichen.

## Claims

1. Filling arrangement for filling a flowable medium (3) into a container (5), comprising
- a store (2) for storing the medium (3),
- a filling path (4) having a tubular element (6) via which the medium (3) is guided from the store (2) to the container (5),
- a valve (7) which is arranged in the filling path between the store (2) and container (5) in order to open and close the filling path (4), and
- a throttle device (8) which is arranged on the tubular element (6) and alters an inside diameter of the tubular element at a portion of the tubular element (6) in order to achieve a throttle effect, **characterized in that** the inside diameter changed by the throttle device (8) is circular.

2. Filling arrangement according to Claim 1, **characterized in that** the throttle device (8) is arranged on the outside of the tubular element (6).

3. Filling arrangement according to Claim 2, **characterized in that** the throttle device (8) is fastened in a detachable manner to the outside of the tubular element (6).

4. Filling arrangement according to one of the preceding claims, **characterized in that** the throttle device (8) comprises a basic part (10) and a movable clamping part (20) which is operatively connected to the basic part (10), wherein the basic part (10) comprises a stationary holding part (11) and a flexible region (12), and wherein the flexible region (12) can be brought into contact with the movable clamping part (20) in order to change the inside diameter of the tubular element (6).

5. Filling arrangement according to Claim 4, **characterized in that** the flexible region (12) has a multiplicity of finger elements which are arranged in a uniform manner along a periphery of the basic part (10).

6. Filling arrangement according to Claim 4 or 5, **characterized in that** the clamping part (20) has a tapering region (23) which can be brought into contact with the flexible region (12).

7. Filling arrangement according to one of Claims 4 to 6, **characterized in that** the basic part (10) is connected to the movable clamping part (20) by means of a threaded connection (13).

8. Filling arrangement according to one of Claims 4 to 6, **characterized in that** the basic part (10) is connected to the movable clamping part (20) by means of a latching connection.

9. Filling arrangement according to one of Claims 3 to 7, **characterized in that** the movable clamping part (20) is formed in two parts from a cylindrical first part (21) and a second part (22) having a tapering region (23), wherein the first part (21) is connected in a form-fitting manner to the second part (22).

10. Filling arrangement according to one of the preceding claims, further comprising a drive device, in particular an electric motor, in order to carry out a relative adjustment between the basic part (10) and the movable clamping part (20).

11. Filling arrangement according to one of Claims 1 to 3, **characterized in that** the throttle device (8) comprises a cylinder (31), a first end part (32) connected to the cylinder (31), a second end part (33) connected to the cylinder (31) and a deformable second tubular piece (35) arranged between the first end part (32) and the second end part (33), these components forming a pressure chamber (30) on the outside of the tubular element (6), in order to allow a concentric change in the inside diameter of the tubular element (6) by means of a pressurized medium supplied into the pressure chamber (30).

## Revendications

1. Dispositif de remplissage pour verser un milieu coulant (3) dans un récipient (5), comprenant :
- un accumulateur (2) pour accumuler le milieu (3),
- une ligne de remplissage (4) avec un élément de flexible (6), par le biais duquel le milieu (3) est guidé de l'accumulateur (2) jusqu'au récipient (5),
- une soupape (7) qui est disposée dans la ligne de remplissage entre l'accumulateur (2) et le récipient (5), afin d'ouvrir et de fermer la ligne de remplissage (4), et
- un dispositif d'étranglement (8) qui est disposé sur l'élément de flexible (6), et qui modifie au niveau d'une portion de l'élément de flexible (6) un diamètre intérieur de l'élément de flexible pour produire un effet d'étranglement, **caractérisé en ce que** le diamètre intérieur modifié par le dispositif d'étranglement (8) est circulaire.

2. Dispositif de remplissage selon la revendication 1, **caractérisé en ce que** le dispositif d'étranglement (8) est disposé sur le côté extérieur de l'élément de flexible (6).

3. Dispositif de remplissage selon la revendication 2, **caractérisé en ce que** le dispositif d'étranglement (8) est fixé de manière amovible sur le côté extérieur de l'élément de flexible (6).

4. Dispositif de remplissage selon l'une quelconque des revendications précédentes, **caractérisé en ce que** le dispositif d'étranglement (8) comprend une partie de base (10) et une partie de serrage mobile (20), qui est en liaison fonctionnelle avec la partie de base (10), la partie de base (10) comprenant une région de retenue fixe (11) et une région flexible (12), et la région flexible (12) pouvant être amenée en contact avec la partie de serrage mobile (20) afin de modifier le diamètre intérieur de l'élément de flexible (6).

5. Dispositif de remplissage selon la revendication 4, **caractérisé en ce que** la région flexible (12) présente une pluralité d'éléments de doigts qui sont disposés uniformément le long d'une périphérie de la partie de base (10).

6. Dispositif de remplissage selon la revendication 4 ou 5, **caractérisé en ce que** la partie de serrage (20) présente une région (23) se rétrécissant, qui peut être amenée en contact avec la région flexible (12).

7. Dispositif de remplissage selon l'une quelconque des revendications 4 à 6, **caractérisé en ce que** la partie de base (10) est connectée à la partie de serrage mobile (20) au moyen d'une connexion filetée (13).

8. Dispositif de remplissage selon l'une quelconque des revendications 4 à 6, **caractérisé en ce que** la partie de base (10) est connectée à la partie de serrage mobile (20) au moyen d'une connexion par encliquetage.

9. Dispositif de remplissage selon l'une quelconque des revendications 3 à 7, **caractérisé en ce que** la partie de serrage mobile (20) est formée en deux parties en une première partie cylindrique (21) et une deuxième partie (22) avec la région (23) se rétrécissant, la première partie (21) étant connectée par engagement par coopération de forme avec la deuxième partie (22).

10. Dispositif de remplissage selon l'une quelconque des revendications précédentes, comprenant en outre un dispositif d'entraînement, en particulier un moteur électrique afin d'effectuer un réglage relatif entre la partie de base (10) et la partie de serrage mobile (20).

11. Dispositif de remplissage selon l'une quelconque des revendications 1 à 3, **caractérisé en ce que** le dispositif d'étranglement (8) comprend un cylindre (31), une première partie d'extrémité (32) connectée au cylindre (31), une deuxième partie d'extrémité (33) connectée au cylindre (31) et une deuxième portion de flexible (35) déformable disposée entre la première partie d'extrémité (32) et la deuxième partie d'extrémité (33), lesquelles forment sur le côté extérieur de l'élément de flexible (6) un espace de pression (30), afin de permettre une modification concentrique du diamètre intérieur de l'élément de flexible (6) au moyen d'un milieu sous pression acheminé dans l'espace de pression (30).
